# FASCICULE DE BREVET EUROPEEN

(11) **EP 0 566 481 B1**
(45) Date de publication et mention de la délivrance du brevet: **13.08.1997**
(21) Numéro de dépôt: 93400964.8
(22) Date de dépôt: 13.04.1993
(51) Int. Cl.: G06F 13/40

(54) **Structure d'accueil pour adaptateurs de terminaux**
Aufnahmestruktur für Terminaladapter
Shell structure for terminal adapters

(30) Priorité: 14.04.1992 FR 9204580
(43) Date de publication de la demande: 20.10.1993
(73) Titulaire: BULL S.A., 92800 Puteaux (FR)
(72) Inventeur: Le Gallo, Rémy, F-78150 Le Chesnay (FR); Lyvet, Gérard, F-78340 Les Clayes sous Bois (FR); Malgogne, Bernard, F-28100 Dreux (FR)
(74) Mandataire: Gouesmel, Daniel

(56) Documents cités:
- DE-U- 9 104 790
- US-A- 5 010 450
- US-A- 5 058 110

## Description

La présente invention concerne une structure d'accueil pour adaptateurs de terminaux, lesquels appartiennent à une architecture informatique distribuée. Elle est plus particulièrement applicable à une architecture utilisant un réseau local de type CSMA/CD, par exemple de type ETHERNET, CHEAPERNET. L'un comme l'autre de ces deux réseaux sera désigné, dans la suite du texte, sous le nom global de Réseau ETHERNET, pour des raisons de commodités de langage.

Les réseaux locaux (Local Area Network, LAN) de type CSMA/CD sont couramment utilisés. Ils sont normalisés par le Comité IEEE de l'Institute of Electrical and Electronic Engineer, sous la forme du standard 802.3 (repris par l'ISO, Organisation Internationale de Normalisation, sous la forme du standard ISO 8802.3). Parmi ceux-ci, les réseaux ETHERNET ont un débit de transmission des données de l'ordre de 10 Mbits/s.

Du fait du développement technologique des réseaux, on peut connecter à ceux-ci des terminaux de données de plus en plus nombreux, ce qui conduit à développer au sein même des ordinateurs qui communiquent à travers ces réseaux, des serveurs de communication, dont le rôle est de réduire la charge de l'unité centrale de l'ordinateur en effectuant une partie de la gestion des messages émis par les différents éléments constitutifs de cet ordinateur aussi bien que des messages provenant des autres terminaux du réseau auquel cet ordinateur est relié.

Le développement de la puissance et de la capacité de traitement des unités centrales des ordinateurs fait qu'il est possible de faire communiquer un nombre croissant de périphériques d'entrée/sortie avec les processeurs centraux de l'ordinateur. Ces périphériques d'entrée/sortie sont le plus souvent des terminaux synchrones ou asynchrones communiquant avec leur environnement extérieur par l'intermédiaire de lignes de transmission ayant des débits pouvant aller de 300 bits/s à 2 Mbits/s. Les modes de transmission et les protocoles utilisés sur les liaisons de transmission correspondantes à ces terminaux sont par exemple définies par les avis V-24, V-28, V-11, V-35, V-36 du CCITT (Comité Consultatif International Télégraphique et Téléphonique). Ces liaisons de transmission sont supportées physiquement par des supports de transmission qui sont en fait autant de câbles ou paires de fils torsadés distinctes.

Les grands systèmes informatiques modernes peuvent compter jusqu'à plusieurs centaines de terminaux, qui sont donc reliés par autant de câbles ou ensembles de fils à l'ordinateur ou aux ordinateurs qui font partie de ces grands systèmes. Lorsque de tels terminaux sont répartis dans un site géographique de surface restreinte, l'existence d'un grand nombre de câbles et de fils pose des problèmes mécaniques, physiques (diaphonie, etc...) et d'encombrements extrêmement importants.

Dans la pratique courante, on a l'habitude de relier un système informatique donné, d'une part à d'autres systèmes du même type, et d'autre part à ces propres terminaux d'entrée/sortie par l'intermédiaire d'un réseau ETHERNET. Le serveur de communication de l'ordinateur est alors relié aux différents terminaux par l'intermédiaire d'une pluralité d'adaptateurs dont la fonction est d'adapter le débit de transmission et le protocole de transmission du réseau ETHERNET aux débit et protocole utilisés sur les différentes lignes de transmission propres à chaque terminal d'entrée/sortie. De tels adaptateurs sont par exemple décrits dans la demande de brevet français déposée le 20 décembre 1990, sous le n° 97 16031 et ayant pour titre "architecture informatique distribuée utilisant un réseau local de type CSMA/CD", demande déposée par la demanderesse.

On connait des moyens pour déporter tous les supports de transmission constitués par les câbles ou ensembles de fils torsadés à l'extérieur de l'espace géographique occupé par l'ordinateur et son serveur de communication, ces moyens occupant un espace géographique réduit. Ces moyens définissent ce que l'on peut appeler une structure d'accueil pour adaptateurs. Une telle structure est par exemple décrite dans la demande de brevet français 90 16032 déposée par la demanderesse le 20 décembre 1990 sous le titre "structure d'accueil pour adaptateurs de terminaux appartenant à une architecture informatique distribuée".

Une telle structure comprend :
- un premier compartiment qui contient plusieurs cartouches, lesquelles comportent chacune une carte portant le circuit électronique d'un adaptateur,
- un second compartiment contenant l'alimentation électrique des cartes des adaptateurs contenue dans le premier compartiment, et un dispositif de ventilation de la structure.

Le premier et le second compartiment sont adjacents et séparés l'un de l'autre par un fond de panier portant un bus spécifique du réseau auquel sont connectés les adaptateurs.

Ce fond de panier comporte des moyens de connexion du bus aux dites cartes et au réseau d'une part et à l'alimentation d'autre part. Les cartouches sont parallèles entre elles et sont extractibles. Elles comportent sur leur partie avant, (celle par laquelle elles sont extractibles) un ensemble de connecteurs auxquels sont branchés les supports de transmission menant à chacun des terminaux associés à l'adaptateur contenu dans la dite cartouche. L'avantage d'une telle structure est sa modularité. Toutefois elle présente l'inconvénient suivant : dans le cas où il est nécessaire de changer un adaptateur, il faut déconnecter chacun des câbles assurant la liaison avec les terminaux correspondant avant de retirer la cartouche contenant le dit adaptateur. Ceci est peu pratique et occasionne des difficultés de manipulation ainsi que des pertes de temps.

La présente invention permet de remédier à ces inconvénients et concerne une nouvelle structure d'accueil où il est possible de retirer la cartouche contenant un adaptateur défectueux sans avoir besoin de déconnecter les câbles reliés aux terminaux correspondants.

Afin de limiter les effets électromagnétiques dûs aux câbles de transmission, le document DE-U-9 104 790 divulgue un châssis d'ordinateur de type panier à deux compartiments, permettant de connecter par le fond du panier des modules de traitement informatique à des cartes d'interface, insérées dans les compartiments avant et arrière, respectivement.

Selon l'invention, la structure d'accueil pour adaptateurs de terminaux appartenant à une architecture informatique distribuée, formée d'une pluralité de systèmes informatiques connectés chacun par l'intermédiaire de serveurs de communication à au moins un réseau, chaque système étant relié à une pluralité de terminaux synchrones ou asynchrones par l'intermédiaire du réseau et d'adaptateurs de terminaux dont chacun est d'une part connecté au réseau et d'autre part à au moins un terminal par l'intermédiaire d'un liaison de transmission synchrone ou asynchrone, contenant une pluralité de cartes d'adaptateurs portant chacune le circuit électronique d'un adaptateur, est caractérisée comme revendiqué à la revendication 1.

D'autre caractéristiques et avantages de la présente invention apparaitront dans la description suivante donnée à titre d'exemple non limitatif et en se référant aux dessins annexés.

Sur ces dessins :
- La figure 1 est un schéma simplifié de l'architecture informatique distribuée à laquelle appartiennent les adaptateurs de terminaux regroupés dans la structure d'accueil selon l'invention,
- La figure 2 montre plus en détail comme peuvent être reliées entre elles des structures d'accueil d'adaptateur de terminaux, à l'intérieur du schéma de la figure 1,
- La figure 3 composée des figures 3a et 3b montre la structure physique d'un adaptateur contenu dans la structure selon l'invention, en montrant le fond de panier et la carte de connexion associés à cet adaptateur,
- La figure 4 composée des figures 4a et 4b montre la structure physique d'un adaptateur spécifique pour terminaux rapides (2 Mbits/s), montrant le fond de panier et la carte de connexion associés à cet adaptateur,
- La figure 5 montre, vu de 3/4 en perspective, la structure physique d'accueil des cartes d'adaptateurs selon l'invention,
- La figure 6 montre la structure physique d'un noyau (HUB) contenu dans la structure d'accueil selon l'invention.

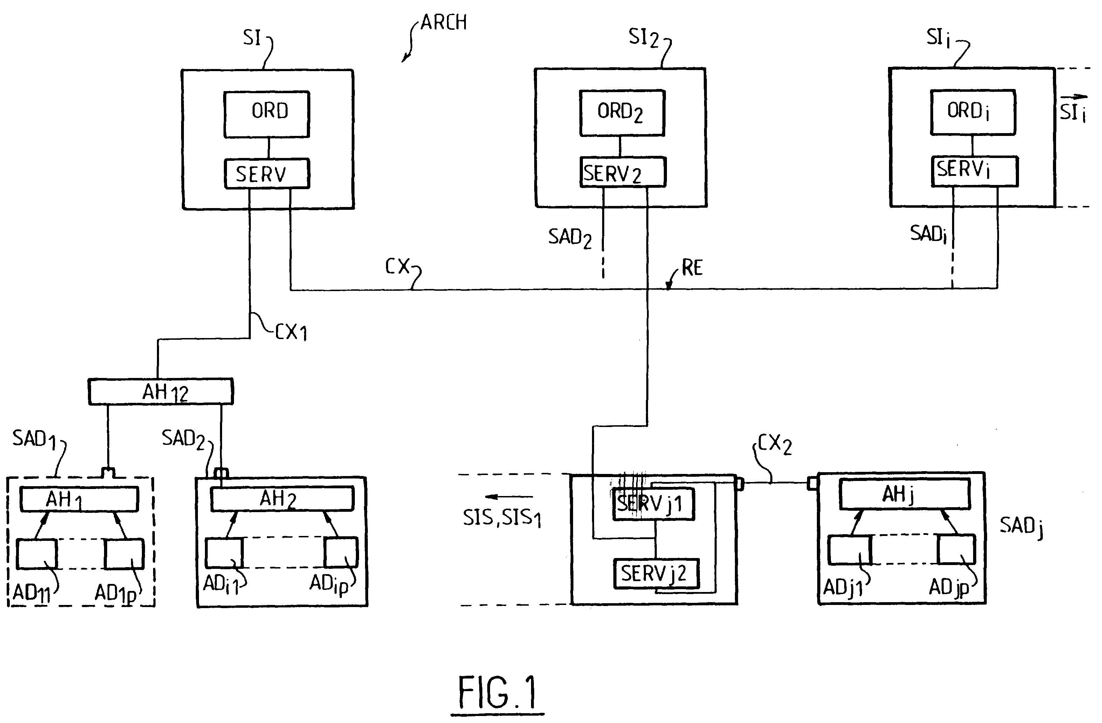

On considère la figure 1 qui montre une architecture informatique distribuée ARCH dans laquelle s'insère un ou plusieurs ensembles d'adaptateurs, encore appelé systèmes adaptateurs, contenus chacun dans une structure d'accueil selon l'invention.

ARCH comprend une pluralité de systèmes informatiques SI, SI₁, SI₂, ..., SIᵢ contenant chacun des serveurs de communication SERV, SERV₁, SERV₂, .... SERVᵢ ainsi qu'un ensemble de systèmes informatiques serveur SIS, SIS₁,...., SISⱼ. Tous ces systèmes sont raccordés à un réseau ETHERNET RE dont le support de transmission est constitué par les câbles CX, CX₁.

L'architecture ARCH comprend également une pluralité de systèmes adaptateurs SAD₁, SAD₂, ...., SADᵢ, SADⱼ.

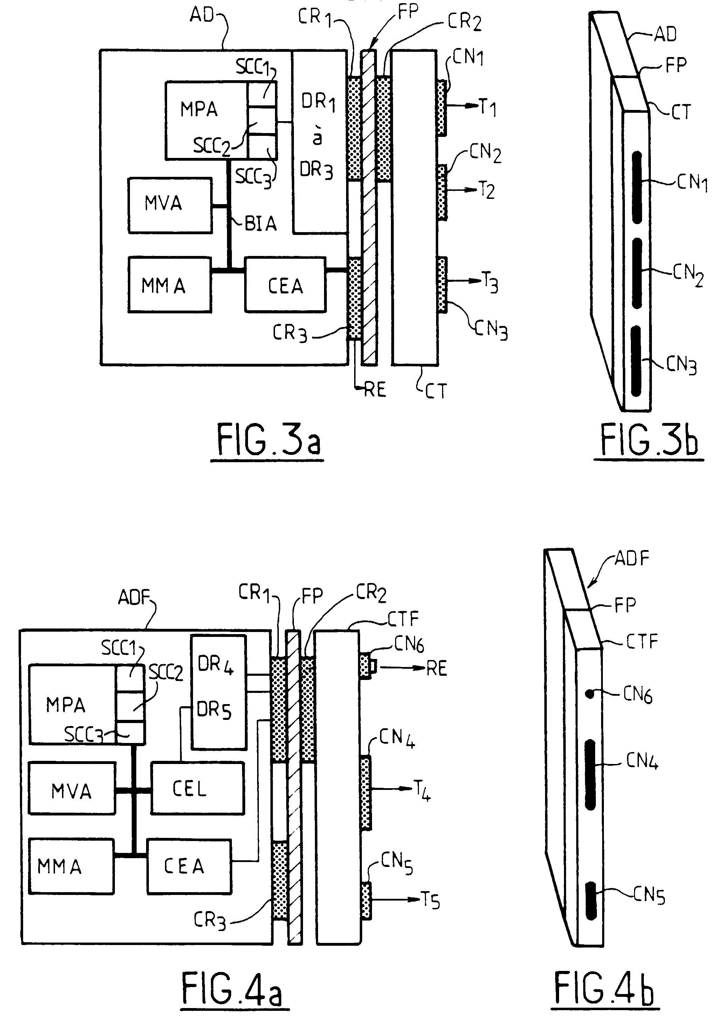

A la figure 1, on a représenté les systèmes adaptateurs SAD₁ et SAD₂ ainsi que le système adaptateur SADⱼ. Comme on peut le voir sur cette même figure, chaque système adaptateur comprend p adaptateurs, pouvant appartenir par exemple à l'un des deux modèles d'adaptateurs montrés aux figures 3 et 4, qui sont reliés à un même noyau (HUB, en anglais). Ainsi, par exemple, le système adaptateur SAD₂ comprend les p adaptateurs AD₂₁, ..., AD₂ₚ de même que le système adaptateur SADⱼ comprend les p adaptateurs ADⱼ₁, ....., ADⱼₚ. Les p adaptateurs de SAD₁, SAD₂, SADⱼ sont connectés respectivement au noyau AH₁, AH₂, AHⱼ.

A la figure 1, les deux systèmes adaptateur SAD₁, SAD₂ sont reliés par l'intermédiaire de leur noyau respectif AH₁, AH₂ à un même noyau AH₁₂. Ce dernier est relié par l'intermédiaire du câble coaxial CX₁ au serveur SERv du système informatique SI.

Des exemples de serveurs de communication tel que SERv, SERV₂, SERV₁ ainsi que le système informatique serveur SISⱼ composé des deux serveurs SERVⱼ₁ et SERVⱼ₂ sont décrits dans la demande de brevet français N° 90 16031 précitée. On voit que l'ensemble des deux systèmes adaptateurs SAD₁, SAD₂ associés au noyau AH₁₂ forment une structure en étoile.

Tous les systèmes informatiques SI, SI₁, SIᵢ ont une structure analogue. Le système SI comprend un ordinateur ORD et un serveur de communication SERV, le système informatique SIᵢ comprenant de la même façon un ordinateur ORDᵢ et un serveur de communication SERVᵢ. De même tous les systèmes informatiques serveur du type de SISⱼ ont la même structure et comprennent un premier et second serveur de communication SERVⱼ₁ et SERVⱼ₂.

Chaque adaptateur ADᵢₚ est associé à une pluralité de terminaux d'entrée/sortie synchrones ou asynchrones, trois dans l'exemple de réalisé préféré de l'invention.

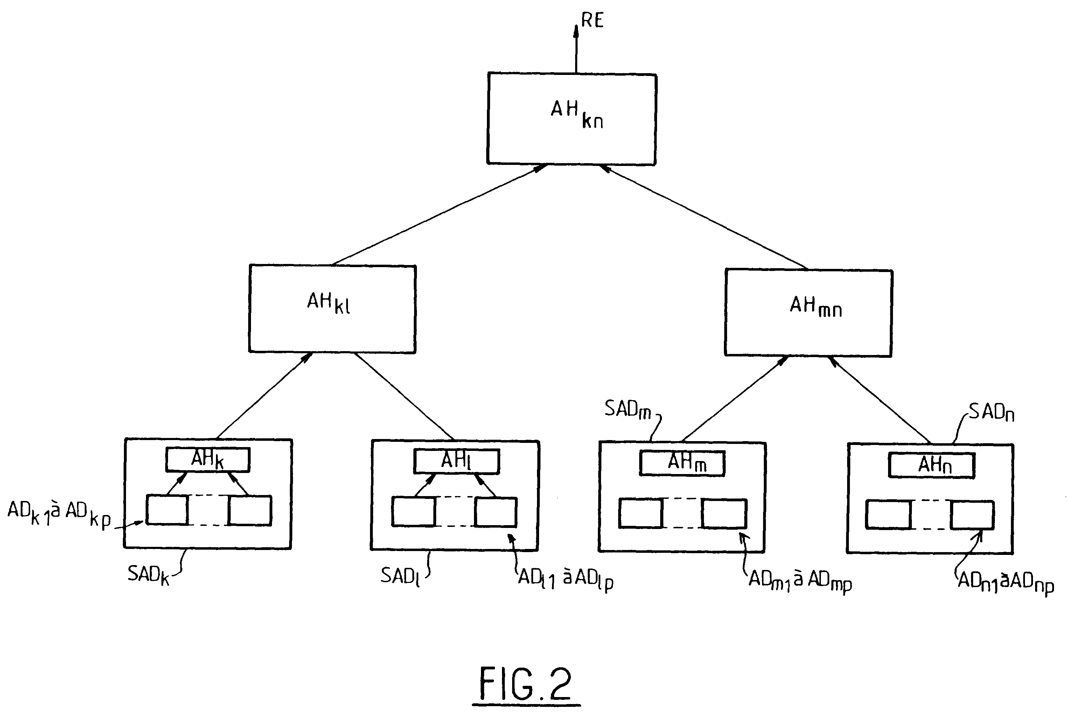

On se reporte à la figure 2 qui montre de manière plus générale la structure en étoile, permettant de relier entre eux une pluralité de systèmes adaptateur.

On considère donc les systèmes adaptateur SADₖ, SADₗ, SADₘ, SADₙ. Ces quatres systèmes adaptateur comprennent donc respectivement les adaptateurs ADₖ₁ à ADₖₚ, ADₗ₁ à ADₗₚ, ADₘ₁ à ADₘₚ, ADₙ₁ à ADₙₚ.

Les deux systèmes adaptateur SADₖ et SADₗ sont reliés par l'intermédiaire de leurs noyaux respectifs AHₖ et AHₗ, au noyau AHₖₗ alors que les deux systèmes adaptateur SADₘ et SADₙ sont reliés par l'intermédiaire de leurs noyaux respectifs AHₘ et AHₙ au noyau AHₘₙ. Les deux noyaux AHₖₗ et AHₘₙ sont eux-mêmes reliés à un noyau AHₖₙ.

Ce dernier noyau est lui-même connecté directement au réseau RE, par exemple au coaxial CX. Il est évident qu'il pourrait être également relié à un autre noyau.

En considérant les figures 1 et 2, on voit que chaque système adaptateur SADᵢ, SADⱼ peut être considéré comme un terminal particulier du réseau ETHERNET RE.

Le rôle de chaque adaptateur ADᵢₚ est le suivant : il reçoit les trames ETHERNET provenant du réseau RE, les stocke, et forme des trames dont le format est spécifique à chacun des terminaux d'entrée/sortie auquel il est associé. Il effectue ensuite le transfert des trames ainsi formées vers chacun de ces terminaux. Il transforme donc les trames de type ETHERNET en trames spécifiques à chacun à des terminaux d'entrée/sortie en effectuant l'adaptation du protocole et de débit de transmission propre au réseau ETHERNET au protocole et au débit de transmission propres aux liaisons spécifiques de ces mêmes terminaux. Bien entendu, le même travail est effectué dans l'autre sens, c'est à dire depuis les terminaux d'entrée/sortie vers le réseau ETHERNET.

Tout adaptateur ADᵢₚ a une structure appartenant à l'un ou l'autre des deux modèles montré aux figures 3a et 4a.

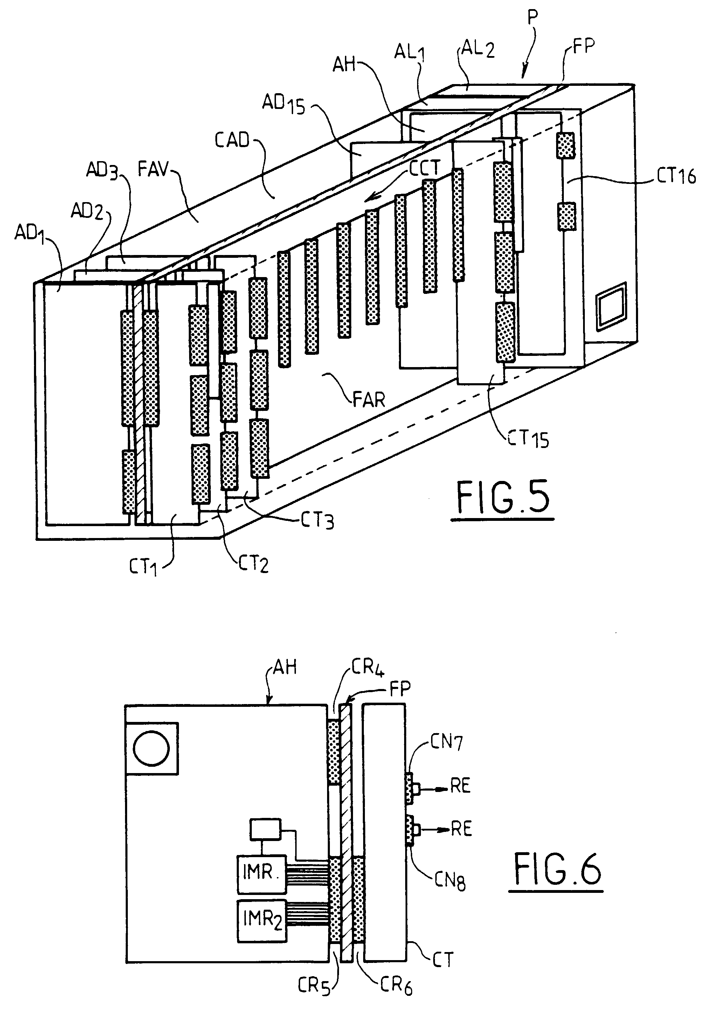

Le premier modèle d'adaptateur désigné par AD, montré à la figure 3a comprend :
- un contrôleur ETHERNET CEA relié par l'intermédiaire d'une interface (par exemple un transceiver de type CHEAPERNET) au réseau ETHERNET RE. La manière détaillée dont cette liaison est réalisée dans la structure d'accueil selon l'invention, sera décrite en détail plus loin, en relation avec la figure 5. Ce contrôleur est par exemple constitué par un circuit de la Firme "National Semiconductors" appelé circuit STNIC ayant la référence chez ce constructeur. Un tel circuit permet d'émettre des trames respectant la norme 8802.3 précitée ou de recevoir des trames provenant du réseau RE conforme à cette dernière. Pour plus de détail concernant ce contrôleur CEA, on se reportera aux fiches techniques du constructeur.
- Un microprocesseur MPA associé d'une part à la mémoire vive MVA de 512 kilo octets de capacité et à une mémoire morte programmable MMA de 128 kilo octets de capacité,
- les trois contrôleurs de communication série identiques entre eux SCC₁, SCC₂, SCC₃, chacun de ceux-ci étant associé à un terminal particulier, c'est à dire l'un des trois terminaux T₁, T₂, T₃ associé à l'adaptateur AD.

Dans un exemple préféré de réalisation de l'invention, le microprocesseur MPA et les trois contrôleurs SCC₁ à SCC₃ sont constitués par un micro-contrôleur 68302 de la Société MOTOROLA.
- les trois adaptateurs de lignes DR₁, DR₂, DR₃ correspondant respectivement chacun aux terminaux T₁, T₂, T₃ et aux contrôleurs de communication série SCC₁ à SCC₃.

Les éléments CEA, MPA, MVA, MMA sont reliés au bus interne BIA du microprocesseur MPA.

De plus amples détails sur le fonctionnement de l'adaptateur AD ainsi que sur l'établissement du dialogue et le dialogue lui-même entre cet adaptateur et un serveur de communication quelconque sont fournis dans la demande de brevet français 90 16031 précitée.

Un autre modèle d'adaptateur est montré à la figure 4a. Il s'agit du modèle ADF qui est associé à des terminaux T₄ et T₅ utilisant des liaisons de transmission rapides, par exemple, 256 kbits/s. Cet adaptateur ADF comprend les mêmes éléments MPA, MVA, MMA, CEA que l'adaptateur AD de la figure 3a. Il ne comporte que deux adaptateurs de lignes DR₄ et DR₅ et comporte en outre un contrôleur pour liaison rapide CEL, par exemple de type MC68605X25 de la Société MOTOROLA qui permet d'implémenter sur la liaison de transmission relative à l'un ou l'autre des terminaux T₄ et T₅, la procédure 1984X25-2LAP. Les liaison T₄ et T₅ sont par exemple des liaisons de type V₁₁ ou encore V₂₈ ou V₃₅. Le contrôleur CEL est à la fois relié au bus interne BIA du microprocesseur MPA et d'autre part aux deux adaptateurs de lignes DR₄-DR₅.

On considère la figure 6 qui montre une carte AH portant deux noyaux IMR₁ et IMR₂ qui sont des composants du commerce fournis par la société AMD (Advance Micro devices). La carte AH est reliée par l'intermédiaire des connecteurs CR₄ et CR₅ au fond de panier FP. La carte de connexion CT correspondante est reliée au fond de panier par le connecteur CR₆, lui-même relié fil à fil et borne à borne au connecteur CR₅ appartenant à la carte AH. La carte de connexion CT comporte deux connecteurs CN₇ et CN₈ permettant de relier chacun des deux noyaux IMR₁ et IMR₂ au réseau RE.

On considère la figure 5 qui montre un modèle de structure physique d'accueil P destiné à recevoir n'importe lequel des systèmes adaptateurs SAD₁, SAD₂,..., SADᵢ, SADⱼ, etc..

Cette structure P a une forme parallélépipédique rectangulaire comportant un premier compartiment CAD situé à gauche de la figure 5 et un second compartiment CCT situé à droite de la figure 5. Le premier compartiment CAD comporte une pluralité de cartes d'adaptateurs qui sont symbolisées à la figure 5 par la carte (le circuit imprimé) qui porte les différents composants électroniques de l'adaptateur montré aux figures 3a et 4a. Dans la suite du texte, on désignera indifféremment sous le nom d'adaptateur, aussi bien le circuit électronique le constituant (tel que représenté aux figures 3a et 4a) que la carte portant ce circuit électronique.

La structure P comporte dans sa partie CAD une pluralité p d'adaptateurs, p étant ici supposé égal à 15. Ces adaptateurs sont parallèles les uns aux autres. La structure P comporte également un noyau AH, disposé sur une carte dont les dimensions sont analogues à celles des adaptateurs AD₁ à ADₚ, et qui est situé à l'une des extrémités latérales de la structure P, par exemple, dans le haut de la figure 5.

Les adaptateurs AD₁ à AD₁₅, ainsi que AH, sont ainsi qu'on peut le voir à la figure 5, disposés par exemple dans la partie gauche de celle-ci. Quant+
à la partie droite, elle est occupée par le second compartiment CCT qui comprend une pluralité de cartes de connexion, à savoir CT₁, CT₂,CT₃,..., CT₁₅ et CT₁₆. A chacun des adaptateurs AD₁,AD₂,...,AD₁₅ correspondent les cartes de connexion CT₁, CT₂, ..., CT₁₅, CT₁₆. Toutes les cartes de connexion CT₁ à CT₁₆ sont parallèles les unes aux autres et leur écartement est le même que celui des adaptateurs correspondants. Il existe deux modèles de cartes de connexion que l'on peut voir aux figure 3a et 4a. Le premier modèle de carte de connexion CT est montré à la figure 3a, il comporte dans sa partie droite 3 connecteurs disposés les uns au-dessus des autres avec un même axe de symétrie verticale, à savoir CN₁, CN₂, CN₃, permettant le raccordement des supports de transmission assurant la liaison avec les terminaux T₁, T₂, T₃ associé à l'adaptateur AD. La carte de connexion CT comporte en outre un connecteur 98 points normalisé CR₂ destiné à être connecté au fond de panier FP. Le fond de panier FP sépare le premier compartiment CAD du second compartiment CCT. Il a la forme d'une plaque rectangulaire ayant la même longueur et la même hauteur que la structure P elle-même.

Ce fond de panier permet la connexion sur sa partie gauche de tous les adaptateurs AD₁ à AD₁₅ et du noyau AH au moyen de deux connecteurs, du même modèle que les connecteurs CR₁ et CR₃ montrés à la figure 3a et 4a, le premier d'entre eux permettant la connexion des adaptateurs de lignes DR₁ à DR₃, (DR₄-DR₅), le second d'entre eux permettant la connexion de l'adaptateur au réseau RE. Ainsi que l'on peut le voir aux figures 3a et 4a, le connecteur CR₁ occupe la partie supérieure de l'adaptateur alors que le connecteur CR₃ occupe sa partie inférieure. Le connecteur CR₁ est un connecteur 96 points alors que le connecteur CR₃ est un connecteur 48 points. Ces deux connecteurs sont normalisés.

Ainsi que l'on peut le voir aux figures 3a et 4a, les deux connecteurs CR₁ et CR₂ sont connectés en correspondance l'un de l'autre au fond de panier FP. La façon dont ils sont connectés permet la correspondance fil à fil, broche à broche des fils électriques aboutissant à ces connecteurs.

L'ensemble des connecteurs tels que CN₁, CN₂, CN₃ ou encore CN₄, CN₅ et CN₆ (voir figures 3a et 4a ainsi que 3b et 4b) sont disposés sur la face arrière FAR du compartiment CCT qui occupe par conséquent la partie droite de la structure P à la figure 5. On voit donc que l'ensemble des câbles qui portent les supports de transmission des différents terminaux associés aux systèmes adaptateur portés par la structure P sont connectés sur la partie droite de la structure P à la figure 5.

Les différentes cartes de connexion CT₁ à CT₁₅ ainsi que la carte CT₁₆ sont fixes et restent donc en permanence à l'intérieur de la structure P alors que les différents adaptateurs AD₁ à AD₁₅ et AH sont amovibles.

Dans le cas où l'on désire changer un adaptateur quelconque, il suffit de l'extraire par la face avant FAV (située sur la partie gauche de la figure 5) et de le remplacer par un autre en faisant coulisser, soit de la droite vers la gauche soit de la gauche vers la droite, l'adaptateur en question pour le retirer ou l'insérer. Ainsi on peut voir l'avantage de la structure P selon l'invention qui permet un remplacement extrêmement aisé des adaptateurs sans avoir besoin comme dans la structure selon l'art antérieur de déconnecter les liaisons avec les différents terminaux. Il est clair que chaque adaptateur est muni, dans sa partie supérieure et inférieure de poignées associées à des moyens mécaniques de type connu permettant l'insertion ou l'extraction ainsi que la fixation de l'adaptateur dans la structure P (par exemple, voir demande de brevet 90 16032 précitée).

On peut également voir à la figure 5 que la structure P comporte dans sa partie située du côté du noyau AH, deux alimentations électriques AL₁ et AL₂, qui sont situées dans la partie supérieure de la figure 5. La première d'entre elles est destinée à alimenter l'ensemble des adaptateurs AD₁ à AD₁₅, ainsi que AH, alors que la seconde alimentation AL₂ est une alimentation de secours destinée à remplacer la première lorsque celle-ci est défaillante.

Il convient de préciser que plusieurs structures identiques à la structure P de la figure 5 peuvent être disposées les unes à côté des autres dans une même armoire, un même système de ventilation étant utilisé pour assurer le refroidissement de l'ensemble de celles-ci.

Les adaptateurs AD₁ à AD₁₅ de la structure P montrée à la figure 5 (il est évident qu'il en est de même pour toutes les structures d'adaptateurs quelles qu'elles soient) sont connectés au noyau AH, de la même manière que, par exemple, les adaptateurs AD₂₁ à AD₂ₚ de la figure 1 sont connectés au noyau AH₂, par l'intermédiaire de fils conducteurs imprimés sur le fond de panier FP. Ainsi, ce dernier assure la connexion des différents adaptateurs AD₁ à AD₁₅ au noyau AH. De la même façon, les deux noyaux IMR₁ et IMR₂ sont reliés par l'intermédiaire du fond de panier FP aux deux connecteurs CN₇ et CN₈ eux-mêmes reliés au réseau RE. Le fond de panier FP se présente donc comme un circuit imprimé comportant un certain nombre de conducteurs imprimés reliant les adaptateurs au noyau correspondant.

## Revendications

1. Structure d'accueil (P) pour adaptateurs de terminaux (AD₁ à AD₁₅, AH) appartenant à une architecture informatique distribuée (ARCH), formée d'une pluralité de systèmes informatiques (SI, SIS₁, SISⱼ, SAD₁, SAD₂,...SADⱼ) connectés chacun par l'intermédiaire de serveurs de communication (SERV, SERVI₁, SERVⱼ₁, SERVⱼ₂) à au moins un réseau (RE), chaque système étant relié à une pluralité de terminaux synchrones ou asynchrones (T₁, T₂, T₃, T₄, T₅) par l'intermédiaire du réseau (RE) et d'adaptateurs de terminaux (AD₂₁, ..., AD₂ₚ, ADⱼ₁, ...., ADⱼₚ, AD₁, ..., AD₁₅, AH) dont chacun est d'une part connecté au réseau et d'autre part à au moins un terminal par l'intermédiaire d'un liaison de transmission synchrone ou asynchrone, la structure contenant une pluralité de cartes d'adaptateurs portant chacune le circuit électronique d'un adaptateur, physiquement indépendantes les unes des autres,
et étant caractérisée en ce qu' elle comprend :
- une face avant (FAV) permettant l'extraction des cartes d'adaptateur (AD₁ à AD₁₅, AH) et une face arrière (FAR) permettant la connexion de chaque adaptateur d'une part au réseau et d'autre part au terminal qui lui est associé,
- un compartiment avant (CAD) incluant la face avant et comprenant les cartes d'adaptateur parallèles les unes aux autres,
- un compartiment arrière (CCT) incluant la face arrière et comprenant des cartes de connexion dont chacune est associée à une carte d'adaptateur, leur nombre étant égal au nombre de cartes d'adaptateur,
les deux compartiments étant séparés par un fond de panier (FP), chaque carte d'adaptateur comportant des moyens d'extraction disposés du côté de la face avant et des premiers moyens de connexion (CR1) la reliant à des seconds moyens de connexion (CR2) appartenant à la carte de connexion associée par l'intermédiaire du fond de panier, lequel permet par ailleurs de relier chaque carte au réseau, chaque carte de connexion étant munie de troisièmes moyens de connexion (CN1-CN5) disposés du côté de la face arrière permettant la connexion du terminal associé à la carte d'adaptateur qui lui correspond.

2. Structure d'accueil (P) selon la revendication 1 caractérisée en ce que le premier compartiment (CAD) comprend p cartes d'adaptateurs et au moins un carte (AH) parallèle à, et de mêmes dimensions que celles-ci portant au moins un noyau (IMR₁,IMR₂) connecté au fond de panier (FP) lequel comporte des conducteurs assurant la liaison entre chacun des adaptateurs et le noyau de manière à ce que le système adaptateur (SAD₁, SAD₂,...) formé par les adaptateurs et le noyau ait une structure en étoile.

3. Structure (P) selon l'une des revendications 1, 2 caractérisée en ce que les cartes de connexion (CT₁ à CT₁₅, CT₁₆) sont parallèles les unes aux autres et de même écartement que celui des cartes d'adaptateurs correspondantes.

4. Structure (P) selon l'une des revendications 1,2,3 caractérisée en ce que les cartes d'adaptateurs (AD) comprennent au moins deux connecteurs (CR₁, CR₃) permettant de les relier au fond de panier, le premier d'entre eux permettant la connexion de l'adaptateur correspondant au réseau (RE).

5. Structure selon la revendication 4 caractérisée en ce que le second connecteur (CR₁) est connecté par l'intermédiaire du fond de panier à un connecteur identique (CR₂) appartenant à la carte de connexion correspondante, ce qui permet la connexion de l'adaptateur (AD) aux terminaux qui lui correspondent.

6. Structure selon l'une des revendications 2, 3 caractérisée en ce que la carte (AH) portant le noyau (IMR₁,IMR₂) comporte au moins un troisième connecteur (CR₅) permettant la liaison entre le noyau et le réseau (RE) par l'intermédiaire d'un quatrième connecteur identique (CR₆) au troisième, et connecté à ce dernier, broche à broche et fil à fil à travers le fond de panier, ce quatrième connecteur porté par la carte de connexion correspondante étant relié par l'intermédiaire de celle-ci au réseau (RE).

## Patentansprüche

1. Aufnahmestruktur (P) für Terminal-Adapter (AD₁ bis AD₁₅, AH), die zu einem offenen Kommunikationssystem (ARCH) gehören, das aus mehreren Datenverarbeitungssystemen (SI, SIS₁, SISⱼ, SAD₁, SAD₂, ..., SADⱼ) gebildet ist, die jeweils über Kommunikations-Server (SERV, SERV₁, SERVⱼ₁, SERVⱼ₂) an wenigstens ein Netz (RE) angeschlossen sind, wobei jedes System über das Netz (RE) und Terminal-Adapter (AD₂₁ *···*, AD₂ₚ, ADⱼ₁, ..., ADⱼₚ, AD₁, ..., AD₁₅, AH), wovon jeder einerseits an das Netz und andererseits über eine synchrone oder asynchrone Übertragungsverbindung an wenigstens ein Terminal angeschlossen ist, mit mehreren synchronen oder asynchronen Terminals (T₁, T₂, T₃, T₄, T₅) verbunden ist, wobei die Struktur mehrere Adapter-Karten enthält, wovon jede die elektronische Schaltung eines Adapters trägt und von den jeweils anderen physisch unabhängig ist, und
dadurch gekennzeichnet, daß sie aufweist:
- eine vordere Fläche (FAV), die die Entnahme der Adapter-Karten (AD₁ bis AD₁₅, AH) ermöglicht, und eine hintere Fläche (FAR), die den Anschluß jedes Adapters einerseits an das Netz und andererseits an das ihm zugeordnete Terminal ermöglicht,
- ein vorderes Fach (CAD), das die vordere Fläche umfaßt und die zueinander parallelen Adapter-Karten enthält,
- ein hinteres Fach (CCT), das die hintere Fläche umfaßt und Anschlußkarten enthält, wovon jede einer Adapter-Karte zugeordnet ist und wobei ihre Anzahl gleich der Anzahl der Adapter-Karten ist,
wobei die zwei Fächer durch einen Verdrahtungsrahmenboden (FP) getrennt sind, wobei jede Adapter-Karte Entnahmemittel, die auf seiten der vorderen Fläche angeordnet sind, und erste Anschlußmittel (CR1) enthält, die sie über den Verdrahtungsrahmenboden mit zweiten Anschlußmitteln (CR2) verbinden, die zur zugeordneten Anschlußkarte gehören, wobei der Verdrahtungsrahmenboden außerdem die Verbindung jeder Karte mit dem Netz ermöglicht, wobei jede Anschlußkarte mit dritten Anschlußmitteln (CN1-CN5) versehen ist, die auf seiten der hinteren Fläche angeordnet sind und den Anschluß des zugeordneten Terminals an die ihm entsprechende Adapter-Karte ermöglichen.

2. Aufnahmestruktur (P) nach Anspruch 1, dadurch gekennzeichnet, daß das erste Fach (CAD) p Adapter-Karten und wenigstens eine Karte (AH) enthält, die zu diesen parallel ist, die gleichen Abmessungen wie diese besitzt und wenigstens einen Kern (IMR₁, IMR₂) trägt, der an den Verdrahtungsrahmenboden (FP) angeschlossen ist, der die Leiter trägt, die die Verbindung zwischen jedem der Adapter und dem Kern in der Weise gewährleisten, daß das durch die Adapter und den Kern gebildete Adapter-System (SAD₁, SAD₂, ...) eine Sternstruktur besitzt.

3. Struktur (P) nach einem der Ansprüche 1, 2, dadurch gekennzeichnet, daß die Anschlußkarten (CT₁ bis CT₁₅, CT₁₆) zueinander parallel sind und den gleichen Abstand wie die entsprechenden Adapter-Karten besitzen.

4. Struktur (P) nach einem der Ansprüche 1, 2, 3, dadurch gekennzeichnet, daß die Adapter-Karten (AD) wenigstens zwei Verbinder (CR₁, CR₃) enthalten, die ihre Verbindung mit dem Verdrahtungsrahmenboden ermöglichen, wobei der erste von ihnen den Anschluß des entsprechenden Adapters an das Netz (RE) ermöglicht.

5. Struktur nach Anspruch 4, dadurch gekennzeichnet, daß der zweite Verbinder (CR₁) über den Verdrahtungsrahmenboden an einen völlig gleichen Verbinder (CR₂) angeschlossen ist, der zur entsprechenden Anschlußkarte gehört, wodurch der Anschluß des Adapters (AD) an die ihm entsprechenden Terminals möglich ist.

6. Struktur nach einem der Ansprüche 2, 3, dadurch gekennzeichnet, daß die Karte (AH), die den Kern (IMR₁, IMR₂) trägt, wenigstens einen dritten Verbinder (CR₅) enthält, der die Verbindung zwischen dem Kern und dem Netz (RE) über einen vierten Verbinder (CR₆), der mit dem dritten völlig übereinstimmt und an diesen letzteren Anschlußstift für Anschlußstift und Draht für Draht durch den Verdrahtungsrahmenboden hindurch angeschlossen ist, ermöglicht, wobei dieser vierte Verbinder, der von der entsprechenden Anschlußkarte getragen wird, über diese mit dem Netz (RE) verbunden ist.

## Claims

1. Host structure (P) for terminal adapters (AD₁ to AD₁₅, AH) belonging to a distributed computer architecture (ARCH), formed of a plurality of computer systems (SI, SIS₁, SISⱼ, SAD₁, SAD₂ ... SADⱼ) each connected via communication servers (SERV, SERV₁, SERVⱼ₁, SERVⱼ₂) to at least one network (RE), each system being connected to a plurality of synchronous or asynchronous terminals (T₁, T₂, T₃, T₄, T₅) via the network (RE) and terminal adapters (AD₂₁, ..., AD₂ₚ, ADⱼ₁, ..., ADⱼₚ, AD₁, ..., AD₁₅, AH) each of which is connected on the one hand to the network and on the other hand to at least one terminal via a synchronous or asynchronous transmission link, the structure containing a plurality of adapter boards each carrying the electronic circuit of an adapter, physically independent of each other,
and being characterised in that it comprises:
- a front panel (FAV) allowing the adapter boards (AD₁ to AD₁₅, AH) to be extracted and a rear panel (FAR) allowing the connection of each adapter on the one hand to the network and on the other hand to the terminal associated therewith,
- a front compartment (CAD) including the front panel and comprising the adapter boards parallel with one another,
- a rear compartment (CCT) including the rear panel and comprising connection boards, each of which is associated with an adapter board, equal in number to the adapter boards,
the two compartments being separated by a backplane (FP), each adapter board comprising extraction means arranged on the side of the front panel and first connection means (CR₁) connecting it to second connection means (CR₂) belonging to the connection board associated via the backplane, which also makes it possible to connect each board to the network, each connection board being provided with third connection means (CN₁ - CN₅) arranged on the side of the rear panel allowing the connection of the terminal associated with the adapter board corresponding thereto.

2. Host structure (P) according to Claim 1 characterised in that the first compartment (CAD) comprises p adapter boards and at least one board (AH) parallel to and of the same dimensions as those carrying at least one core (IMR₁, IMR₂) connected to the backplane (FP) which comprises conductors providing the link between each of the adapters and the core so that the adapter system (SAD₁, SAD₂, ...) formed by the adapters and the core has a star structure.

3. Structure (P) according to one of Claims 1, 2 characterised in that the connection boards (CT₁ to CT₁₅, CT₁₆) are parallel to each other and the same distance apart as the corresponding adapter boards.

4. Structure (P) according to one of Claims 1, 2, 3, characterised in that the adapter boards (AD) comprise at least two connectors (CR₁, CR₃) allowing them to be connected to the backplane, the first of these allowing the connection of the corresponding adapter to the network (RE).

5. Structure according to Claim 4 characterised in that the second connector (CR₁) is connected via the backplane to an identical connector (CR₂) belonging to the corresponding connection board, which allows the connection of the adapter (AD) to the terminals corresponding thereto.

6. Structure according to one of Claims 2, 3 characterised in that the board (AH) carrying the core (IMR₁, IMR₂) comprises at least a third connector (CR₅) allowing the connection between the core and the network (RE) via a fourth connector (CR₆) identical to the third, and connected to the latter, terminal to terminal and wire to wire over the backplane, this fourth connector carried by the corresponding connection board being connected via said connection board to the network (RE).
